# EUROPÄISCHE PATENTSCHRIFT

(11) **EP 3 534 512 B1**
(45) Veröffentlichungstag und Bekanntmachung des Hinweises auf die Patenterteilung: **18.03.2020**
(21) Anmeldenummer: 19000044.8
(22) Anmeldetag: 28.01.2019
(51) Int. Cl.: H02K 15/00, H02K 17/16, H02K 3/02

(54) **KURZSCHLUSSLÄUFER SOWIE VERFAHREN ZUR HERSTELLUNG EINES KURZSCHLUSSLÄUFERS**
SHORT-CIRCUIT ROTOR AND METHOD FOR PRODUCING A SHORT-CIRCUIT ROTOR
ROTOR EN COURT-CIRCUIT ET PROCÉDÉ DE FABRICATION D'UN ROTOR EN COURT-CIRCUIT

(30) Priorität: 28.02.2018 DE 102018001587
(43) Veröffentlichungstag der Anmeldung: 04.09.2019
(73) Patentinhaber: Wieland-Werke AG, 89079 Ulm (DE)
(72) Erfinder: Kästle, Christoph, 89077 Ulm (DE); Krawietz, Thomas, 86554 Pöttmes (DE)

(56) Entgegenhaltungen:
- EP-A2- 2 782 222
- EP-A2- 2 999 101
- US-B1- 9 570 968

## Beschreibung

Die Erfindung betrifft einen Kurzschlussläufer gemäß dem Oberbegriff des Anspruchs 1 sowie ein Verfahren zur Herstellung eines Kurzschlussläufers gemäß dem Oberbegriff des Anspruchs 10.

Bekannte Kurzschlussläufer umfassen ein mit Nuten versehenes Läuferblechpaket und in den Nuten eingebrachte Läuferstäbe aus elektrisch gut leitendem Material. Die Enden der Läuferstäbe stehen über die Stirnseiten des Läuferblechpakets vor und sind mit kompakten Kurzschlussringen hart verlötet oder verschweißt. Die Enden der Läuferstäbe ragen in eingedrehte Ringnuten in den Kurzschlussringen, die das Bett für das Hartlot bilden und mit diesem gefüllt sind. Zur Verhinderung des Aufblätterns des Läuferblechpaketes und von störenden Schwingungen werden stirnseitig gesonderte kompakte Druckringe an das Läuferblechpaket angepresst. Um ferner eine Axialverschiebung der Läuferstäbe in den Nuten des Läuferblechpakets zu verhindern, sind sie mit dem Läuferblechpaket mechanisch fest verbunden.

Aus der Druckschrift DE 34 21 537 A1 ist ein gattungsgemäßer Kurzschlussläufer mit Läuferwicklung bekannt. Die Läuferwicklung umfasst elektrisch leitende Läuferstäbe, die in geschlossenen Nuten eines Läuferblechpaketes angeordnet sind und über dessen Stirnseiten vorragen. Die überstehenden Enden sind mit elektrisch gut leitenden Kurzschlussringen leitend verbunden. Die Kurzschlussringe sind, den Läuferblechen entsprechend, als genutete Blechpakete aus elektrisch gut leitendem Werkstoff ausgebildet und als stirnseitige Druckkörper an der ganzen Fläche wärmeübertragend eng am Läuferblechpaket anliegend in ihren geschlossenen Nuten mit den Läuferstäben fest verbunden. Eine Besonderheit ist, dass die elektrisch leitenden Einzelbleche für die Kurzschlussringe eine größere Dicke als die Läuferbleche aufweisen, im Übrigen jedoch die gleiche Form und Größe wie diese haben. Bei der Herstellung eines Kurzschlussläufers werden die Kurzschlussringe und die Läuferbleche gemeinsam paketiert, mit den stirnseitig eingeschobenen Läuferstäben bestückt und danach unter axialer Pressung des gesamten Paketes die Enden der Läuferstäbe mit den Kurzschlussringen hart verlötet.

Aus der Druckschrift DE 10 2013 005 050 A1 ist ein Kurzschlussläufer für eine Verwendung in einer Asynchronmaschine mit Kurzschlussringen bekannt. Ein Kurzschlussring besteht aus einem Scheibenpaket, welches lagenweise aus Scheiben mit Ausnehmungen aufgebaut ist, durch welche die Enden der Käfigstäbe aus dem Läuferblechpaket hindurchtreten. Die jeweiligen Scheiben eines Kurzschlussringes weisen, ausgehend von der Mantelfläche, über den Außenumfang zumindest eine Fase oder Stufe auf, welche radial einwärts gerichtet ist. Hierdurch bilden benachbarte Scheiben durch ihre jeweiligen Fasen oder Stufen im Scheibenpaket eine Nut aus, in der eine Fügeverbindung ausgebildet ist.

Des Weiteren ist aus der Druckschrift JP S58 - 54 845 A ein Kurzschlussläufer bekannt, bei dem ein Kurzschlussring mit den Enden der Läuferstäbe verschweißt ist. Die Schweißnaht verläuft entlang einer durch Abschrägungen im Material gebildeten Nut.

Der Erfindung liegt die Aufgabe zugrunde, die Fügeverbindungen eines Kurzschlussläufers weiterzubilden.

Die Erfindung wird bezüglich eines Kurzschlussläufers durch die Merkmale des Anspruchs 1 und bezüglich eines Verfahrens zur Herstellung eines Kurzschlussläufers durch die Merkmale des Anspruchs 10 wiedergegeben. Die weiteren rückbezogenen Ansprüche betreffen vorteilhafte Aus- und

### Weiterbildungen der Erfindung.

Die Erfindung schließt einen Kurzschlussläufer ein, wahlweise mit Welle, Läuferblechpaket mit im Innern angeordneten Läuferstäben und Kurzschlussringen, wobei zumindest ein Teil eines Kurzschlussringes aus einem Scheibenpaket besteht, welches lagenweise aus Scheiben mit Ausnehmungen aufgebaut ist, durch welche die Enden der Läuferstäbe aus dem Läuferblechpaket hindurchtreten, wobei das Scheibenpaket eines Kurzschlussringes aus mehreren einzelnen Scheiben mit gleichem Durchmesser aufgebaut ist, und wobei benachbarte Scheiben eines Kurzschlussringes, ausgehend von der Mantelfläche als Stirnseite, über den Außenumfang mittels einer Schweißverbindung verbunden sind, welche sich radial bis zu einer Schweißtiefe einwärts erstreckt. Hierbei unterscheidet sich die Schweißtiefe von zumindest einer Schweißverbindung bei mehreren axial aufeinanderfolgenden Schweißverbindungen zwischen aufeinanderfolgenden Scheiben von der Schweißtiefe der übrigen Schweißverbindungen. Der Kurzschlussläufer ist insbesondere für eine Verwendung in einer Asynchronmaschine vorgesehen.

Die Erfindung geht dabei von der Überlegung aus, dass das Läuferblechpaket mit der Welle und den Kurzschlussringen nach dem Fügevorgang ein kompaktes Kurzschlussläuferbauteil ergibt. Im Läuferblechpaket und den Kurzschlussringen sind Läuferstäbe hindurchgeführt, die mit dem Material der Kurzschlussringe elektrisch leitend verbunden sind. Hierzu haben die Läuferstäbe in Bezug auf das Läuferblechpaket eine Überlänge, so dass diese in Ausnehmungen in die Kurzschlussringe hineinragen. Die Kurzschlussringe werden an beiden Seiten des Läuferblechpakets auf der Welle positioniert. Jeder Kurzschlussring besteht selbst aus einem Scheibenpaket, das aus mehreren einzelnen Scheiben mit gleichem Durchmesser aufgebaut ist. Die Scheiben selbst weisen auf der Scheibenfläche so viele Ausnehmungen auf, wie Läuferstäbe zum Aufbau eines Kurzschlussläufers benötigt werden. Diese zunächst lose zueinander angeordneten Einzelbauteile müssen zu einem kompakten Kurzschlussläufer verbunden werden. Der Schweißvorgang erfolgt, ausgehend von der Stirnseite der Scheiben, über die Mantelfläche jedes Kurzschlussrings. Betrachtet man die Geometrie einer Scheibe als Zylinder, so ist die Mantelfläche die stirnseitige Hüll- bzw. Umfangsfläche, also der in radialer Blickrichtung äußerste Bereich der Oberfläche. Grund- bzw. Deckfläche des Zylinders sind dann die Scheibenflächen senkrecht zu seiner Rotationsachse. Dies hat zur Folge, dass zu einem Scheibenpaket angeordnete benachbarte Scheiben sich vollflächig berühren oder lediglich einen sehr geringen Spalt aufweisen, entlang dem die Schweißverbindung hergestellt werden kann.

Zumindest eine Schweißverbindung reicht radial einwärts betrachtet zumindest bis zu den Läuferstäben. Die Stabbereiche werden beim Fügen folglich durch eine mittels Laserstrahl oder Elektronenstrahl erzeugte Schmelze umströmt und mit den Scheiben elektrisch leitend verbunden. Wesentlich dabei ist, dass zwischen den aneinander liegenden Scheibenflächen benachbarter Scheiben lediglich eine Fügeebene vorhanden ist. In axialer Richtung aufeinanderfolgende benachbarte Schweißverbindungen berühren oder überlappen sich nicht gegenseitig. Eine Schweißverbindung kann als eine um die Mantelfläche umlaufende durchgehende und gleichförmige Schweißnaht ausgeführt sein. Um den Wärmeeintrag durch den Schweißvorgang gegenüber der optimalen elektrischen Anbindung klein zu halten, kann die größte bis zu den Läuferstäben reichende Schweißtiefe zumindest doppelt so groß wie geringste Schweißtiefe sein.

Mit anderen Worten: In Radialrichtung erstreckt sich folglich zumindest eine Schweißnaht zwischen benachbarten Scheiben bis auf das Niveau der Läuferstäbe, um die Einzelteile sowohl elektrisch wie auch mechanisch miteinander fügen zu können. Auf diese Weise wird ein ausreichender elektrischer Kontakt zur Stromleitung beim Betrieb einer Asynchronmaschine hergestellt. Die in jeder Scheibe eingebrachten Ausnehmungen sind in Form und Größe an die Läuferstäbe angepasst, so dass diese mit geringem Spiel positioniert werden können. Die Scheiben der Kurzschlussringe können dabei entweder aus Bandmaterial flächig geschlossene Einzelbauteile darstellen oder auch als offene Scheibe, einem Sprengring gleich, gefertigt sein. Die Ausnehmungen in jeder Scheibe können beispielsweise erodiert, gebohrt oder gestanzt sein.

Mit ungefähr drei bis sieben Scheiben kann bereits ein kompletter Kurzschlussring aufgebaut werden. Die Anzahl der Fügeverbindungen ist hierdurch entsprechend gering, so dass eine wirtschaftliche Herstellung der Kurzschlussläufer ermöglicht wird.

Der besondere Vorteil besteht darin, dass durch einen eng begrenzten jedoch ausreichenden Fügebereich im äußeren Bereich nahe der Mantelfläche eines Kurzschlussrings eine ausreichende mechanische Festigkeit des gesamten Bauteils vorhanden ist. Ebenso stellt sich auch ein zufriedenstellender elektrischer Kontakt der Läuferstäbe mit den Kurzschlussringen ein. Auch bei höherer Temperatur ablaufender Fügeverfahren entsteht eine lokale Erhitzung nur im Fügespalt zwischen zwei Scheiben, ohne das übrige Bauteil und insbesondere das Läuferblechpaket thermisch in Mitleidenschaft zu ziehen. Die für Kurzschlussringe verwendeten Legierungen haben meist durch ihre gute elektrische Leitfähigkeit auch eine ausreichende thermische Leitfähigkeit, wodurch die beim Fügen eingebrachte thermische Energie schnell durch Wärmespreizung abgeführt wird. Auf diese Weise werden die einzelnen Scheiben im Bereich des Außenumfangs gefügt und fest miteinander verbunden.

In bevorzugter Ausgestaltung der Erfindung können die Schweißtiefen in ihrer Erstreckung bei axial aufeinanderfolgenden Schweißverbindungen zwischen aufeinanderfolgenden Scheiben alternierend ausgeführt sein. Hierdurch wird durch eine Wechselfolge von tieferen und weniger tiefen Schweißverbindungen einerseits zumindest durch die tieferen Schweißverbindungen eine gute elektrische Anbindung an die Läuferstäbe vollzogen und mit geringem Wärmeeintrag durch die weniger tiefen Schweißverbindungen noch ein ausreichender Verbund zu einem kompakten Kurzschlussring geschaffen. Die gewünschte elektrisch leitende Verbindung wird insbesondere dadurch bewerkstelligt, dass das Material der einzelnen Scheiben kurzzeitig lokal von der Mantelfläche her angeschmolzen wird und sich benachbarte Scheiben entlang dem Fügespalt mit dem Material der Stabenden verbinden. So wird eine besonders gute elektrische Verbindung zwischen den Läuferstäben und dem Kurzschlussring hergestellt.

Vorteilhafterweise können bei axial aufeinanderfolgenden Schweißverbindungen von außen in Richtung Läuferblechpaket die Schweißtiefen abnehmend ausgeführt sein. Hierdurch wird sowohl eine mechanische wie auch elektrisch leitende Verbindung im ausreichenden Maße hergestellt und zudem der Wärmeeintrag durch den Schweißvorgang in Richtung und insbesondere in unmittelbarer Nähe des Läuferblechpaketes minimiert.

Bei einer vorteilhaften Ausführungsform der Erfindung kann sich die geringste Schweißtiefe zumindest bis zur radial außenliegenden Oberfläche eines Läuferstabes erstrecken. Hierdurch wird zumindest durch eine der Schweißverbindungen eine elektrisch gut leitende Verbindung zu den Läuferstäben geschaffen.

Bei einer vorteilhaften Ausführungsform der Erfindung kann sich die größte Schweißtiefe maximal bis zur radial innenliegenden Oberfläche eines Läuferstabes erstrecken. Hierdurch werden zwischen allen aufeinanderfolgenden Scheiben durch die Schweißverbindungen elektrisch gut leitende Verbindungen zu den Läuferstäben geschaffen.

Vorteilhafterweise können die Schweißverbindungen um den gesamten Außenumfang verlaufen. Neben lokalen Schweißverbindungen am Außenumfang im Bereich der tiefer liegenden Läuferstäbe wird hierdurch eine einheitliche Schweißnaht in Verbindung mit einer guten elektrischen Anbindung an die Läuferstäbe und eine gute mechanische Anbindung der Scheiben untereinander geschaffen.

In vorteilhafter Ausgestaltung der Erfindung können die Schweißverbindungen mittels Elektronenstrahlschweißen oder Laserstrahlschweißen hergestellt sein. Besonders für um den gesamten Umfang verlaufende Fügeverbindungen sind derartige Schweißverbindungen besonders geeignet. Die Schweißraupe entsteht dabei im Inneren an den gemeinsamen Berührungsflächen zwischen den Scheiben und kann diese gegebenenfalls unter Beachtung eines möglichst geringen Wärmeeintrags auch über die Läuferstäbe hinaus nach innen reichen. Beide Fügeverbindungsarten bewirken eine gute elektrische Leitfähigkeit in Verbindung mit einer mechanischen Festigkeit.

Bei einer vorteilhaften Ausführungsform der Erfindung können die Scheiben eine Dicke von 2 mm bis 10 mm, bevorzugt 2 mm bis 6 mm, aufweisen. Die Scheibendicke selbst ist so gewählt, dass entweder durch Stanzen oder durch anderweitige Trennverfahren, beispielsweise aus einem Bandmaterial, ein Einzelbauteil herausgearbeitet werden kann. Insbesondere bei bevorzugten Dicken zwischen 2 und 6 mm ist eine wirtschaftliche Herstellung, ausgehend von Bandmaterial, sichergestellt. Auf der anderen Seite sollte die Scheibendicke möglichst groß gewählt werden, um mit wenigen Scheiben einen kompletten Kurzschlussring aufbauen zu können.

Vorteilhafterweise können die Scheiben aus einer Stahllegierung, einer Aluminiumlegierung, Kupfer oder einer Kupferlegierung, insbesondere aus einer Cu-Cr-Zr-Legierung oder einer Cu-Ag-Legierung, bestehen. Die jeweilige Legierungsauswahl beruht auf einem ausgewogenen Verhältnis einer möglichst guten elektrischen Leitfähigkeit, verbunden mit einer ausreichenden Zugfestigkeit. Die in der bevorzugten Auswahl genannten Legierungen erfüllen diese Erfordernisse. Ein weiterer Aspekt in der Auswahl der Legierungstypen ist auch eine möglichst geringe Anfälligkeit gegen Korrosionsangriffe.

Ein weiterer Aspekt der Erfindung schließt ein Verfahren zur Herstellung eines erfindungsgemäßen Kurzschlussläufers ein, wobei:
- ein Läuferblechpaket auf einer Welle angeordnet wird,
- auf der Welle Kurzschlussringe angeordnet werden, die aus Scheiben mit Ausnehmungen lagenweise zu einem Scheibenpaket zusammengesteckt werden, wobei die Enden der Läuferstäbe aus dem Läuferblechpaket durch die Ausnehmungen hindurchtreten können,
- im Innern des Läuferblechpakets und in den Ausnehmungen der Scheiben Läuferstäbe angeordnet werden,
- benachbarte Scheiben des Kurzschlussringes, ausgehend von der Mantelfläche als Stirnseite, über den Außenumfang mittels einer Schweißverbindung verbunden werden, welche sich radial bis zu einer Schweißtiefe einwärts erstreckt, wobei sich die Schweißtiefe von zumindest einer Schweißverbindung bei mehreren axial aufeinanderfolgenden Schweißverbindungen zwischen aufeinanderfolgenden Scheiben von der Schweißtiefe der übrigen Schweißverbindungen unterscheidet.

Bei einer vorteilhaften Ausführungsform der Erfindung können vor dem Herstellen der Fügeverbindung das Scheibenpaket und das Läuferblechpaket in sich verwunden werden. Durch das Verwinden des gesamten Pakets werden die Läuferstäbe aus der üblichen Position parallel zur Welle um einen gewissen Winkel herausgedreht. Hierzu ist es üblicherweise notwendig, etwas größere Ausnehmungen im Läuferblechpaket und Scheibenpaket auszugestalten, um ein Verdrehen zu ermöglichen. Durch die anschließende Fügeverbindung wird die gesamte Struktur stabilisiert. Auch ist angedacht, die Ausnehmungen im Läuferblechpaket und Scheibenpaket nicht senkrecht zur jeweiligen Scheibenhauptfläche, sondern bereits unter einem Verdrehwinkel auszubilden. Auf diese Weise werden die Durchbrüche auf den Verdrehwinkel angepasst, wodurch ein leichteres Verwinden des Pakets möglich oder vorgegeben ist.

Ausführungsbeispiele der Erfindung werden anhand der schematischen Zeichnungen näher erläutert.

Darin zeigen:
- Fig. 1: schematisch eine Seitenansicht eines Kurzschlussläufers,
- Fig. 2: einen Detailausschnitt aus Figur 1 im Bereich A der Kurzschlussringe, und
- Fig. 3: eine weitere Detailansicht A der Kurzschlussringe.

Einander entsprechende Teile sind in allen Figuren mit denselben Bezugszeichen versehen.

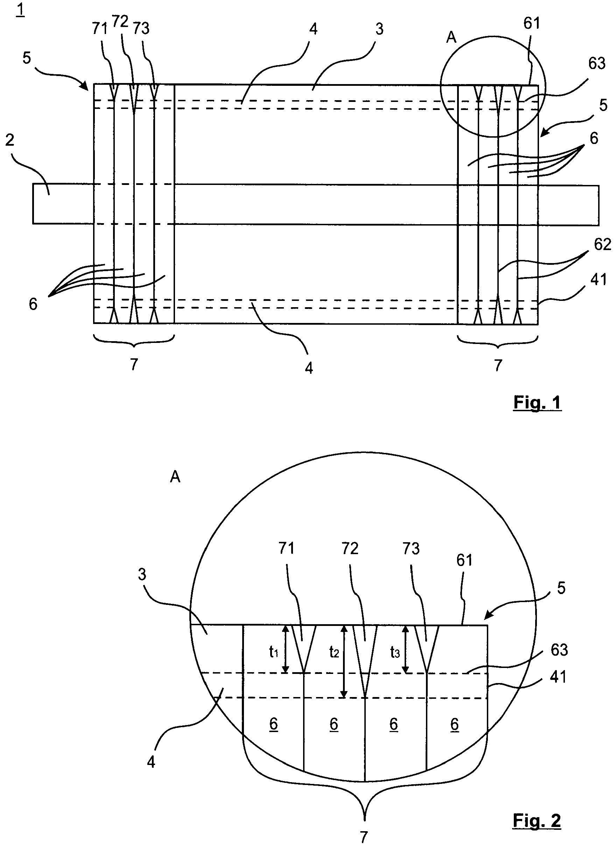

Figur 1 zeigt schematisch eine Seitenansicht eines Kurzschlussläufers 1. In diesem Zustand ist das Läuferblechpaket 3 auf der Welle 2 positioniert, kombiniert mit zwei Kurzschlussringen 5, die das Läuferblechpaket 3 stirnseitig abschließen. Im Inneren des Läuferblechpakets 3 und der Kurzschlussringe 5 sind mehrere Läuferstäbe 4 angeordnet. Die Stabenden 41 der Läuferstäbe 4 ragen in Ausnehmungen 63 der Kurzschlussringe 5 hinein und schließen bündig mit der letzten Scheibe 6 des Scheibenpakets 7 ab. Ein Scheibenpaket 7 besteht in diesem Fall aus vier Scheiben 6, welche ausgehend von der Mantelfläche 61 als Stirnseite über den Außenumfang mittels Schweißverbindungen 71, 72, 73 verbunden sind. Die Schweißverbindungen 71, 72, 73 erstrecken sich radial bis zu einer gewissen Schweißtiefe in Richtung Welle 2 einwärts. Bei der gezeigten Ausgestaltung reichen die Schweißverbindungen 71, 72, 73 radial betrachtet in unterschiedlicher Schweißtiefe bis zur Ausnehmung 63, in die die Läuferstäbe 4 eingebracht sind. Die jeweiligen Grund- bzw. Deckflächen 62 der Scheiben 6 liegen bündig aneinander.

Figur 2 zeigt einen Detailausschnitt aus Figur 1 im Bereich A der Kurzschlussringe. Das Scheibenpaket 7 eines Kurzschlussringes 5 ist aus mehreren einzelnen Scheiben 6 mit gleichem Durchmesser aufgebaut. Benachbarte Scheiben 6 sind, ausgehend von ihrer Mantelfläche 61 als Stirnseite, über den Außenumfang jeweils mittels einer Schweißverbindung 71, 72, 73 verbunden, welche sich radial bis zu einer Schweißtiefe t₁, t₂, t₃ einwärts erstreckt. Es unterscheiden sich die Schweißtiefen t₁, t₂, t₃ der Schweißverbindungen 71, 72, 73 bei den axial aufeinander folgenden Scheiben 6 in ihrer Schweißtiefe von den jeweils benachbarten Schweißverbindungen 71, 72, 73. Das Läuferblechpaket 3 schließt bündig mit der Mantelfläche 61 der jeweiligen Scheiben 6 ab. Insbesondere mittels Elektronenstrahlfügen oder Laserstrahlfügen lassen sich über den Außenumfang glatte und bündig mit der Mantelfläche 61 abschließende Schweißverbindungen 71, 72, 73 herstellen. Die Tiefe der jeweiligen Schweißverbindungen 71, 72, 73 geht bis in den Bereich der Läuferstäbe 4, um diese elektrisch optimal an die Kurzschlussringe 5 anzubinden. Die Stabenden 41 werden beim Fügen durch eine mittels Laserstrahl oder Elektronenstrahl erzeugte Schmelze umströmt und mit den Scheiben 6 elektrisch leitend verbunden.

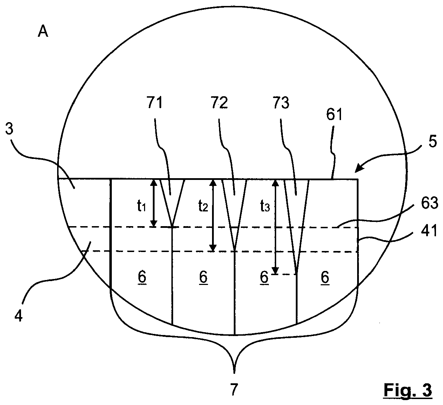

Figur 3 zeigt eine weitere Detailansicht A der Kurzschlussringe 5. Die axial aufeinanderfolgenden Schweißverbindungen 71, 72, 73 sind von außen in Richtung Läuferblechpaket 3 in ihren Schweißtiefen t₁, t₂, t₃ abnehmend ausgeführt. Hierdurch wird eine elektrisch leitende Verbindung im ausreichenden Maße hergestellt und zudem der Wärmeeintrag durch den Schweißvorgang in Richtung des Läuferblechpaketes minimiert.

### Bezugszeichenliste

- 1: Kurzschlussläufer
- 2: Welle
- 3: Läuferblechpaket
- 4: Läuferstab
- 41: Stabende
- 5: Kurzschlussring
- 6: Scheibe
- 61: Mantelfläche
- 62: Grund- bzw. Deckfläche
- 63: Ausnehmung
- 7: Scheibenpaket
- 71: Schweißverbindung
- 72: Schweißverbindung
- 73: Schweißverbindung
- t₁: Schweißtiefe
- t₂: Schweißtiefe
- t₃: Schweißtiefe
- A: Ausschnitt Detailbild

## Patentansprüche

1. Kurzschlussläufer (1), insbesondere für eine Asynchronmaschine, wahlweise mit Welle (2), Läuferblechpaket (3) mit im Innern angeordneten Läuferstäben (4) und Kurzschlussringen (5), wobei zumindest ein Teil eines Kurzschlussringes (5) aus einem Scheibenpaket (7) besteht, welches lagenweise aus Scheiben (6) mit Ausnehmungen (63) aufgebaut ist, durch welche die Enden der Läuferstäbe (4) aus dem Läuferblechpaket (3) hindurchtreten,
**dadurch gekennzeichnet,**
- **dass** das Scheibenpaket (7) eines Kurzschlussringes (5) aus mehreren einzelnen Scheiben (6) mit gleichem Durchmesser aufgebaut ist,
- **dass** benachbarte Scheiben (6) eines Kurzschlussringes (5), ausgehend von der Mantelfläche (61) als Stirnseite, über den Außenumfang mittels einer Schweißverbindung (71, 72, 73) verbunden sind, welche sich radial bis zu einer Schweißtiefe (t₁, t₂, t₃) einwärts erstreckt, und
- **dass** sich die Schweißtiefe (t₁, t₂, t₃) von zumindest einer Schweißverbindung (71, 72, 73) bei mehreren axial aufeinanderfolgenden Schweißverbindungen (71, 72, 73) zwischen aufeinanderfolgenden Scheiben (6) von der Schweißtiefe (t₁, t₂, t₃) der übrigen Schweißverbindungen (71, 72, 73) unterscheidet.

2. Kurzschlussläufer (1) nach Anspruch 1, **dadurch gekennzeichnet, dass** die Schweißtiefen (t₁, t₂, t₃) in ihrer Erstreckung bei axial aufeinanderfolgenden Schweißverbindungen (71, 72, 73) zwischen aufeinanderfolgenden Scheiben (6) alternierend ausgeführt sind.

3. Kurzschlussläufer (1) nach Anspruch 1, **dadurch gekennzeichnet, dass** bei axial aufeinanderfolgenden Schweißverbindungen (71, 72, 73) von außen in Richtung Läuferblechpaket (3) die Schweißtiefen (t₁, t₂, t₃) abnehmend ausgeführt sind.

4. Kurzschlussläufer (1) nach einem der Ansprüche 1 bis 3, **dadurch gekennzeichnet, dass** sich die geringste Schweißtiefe (71, 72, 73) zumindest bis zur radial außenliegenden Oberfläche eines Läuferstabes (4) erstreckt.

5. Kurzschlussläufer (1) nach einem der Ansprüche 1 bis 4, **dadurch gekennzeichnet, dass** sich die größte Schweißtiefe (71, 72, 73) maximal bis zur radial innenliegenden Oberfläche eines Läuferstabes (4) erstreckt.

6. Kurzschlussläufer (1) nach einem der Ansprüche 1 bis 5, **dadurch gekennzeichnet, dass** die Schweißverbindungen (71, 72, 73) um den gesamten Außenumfang verlaufen.

7. Kurzschlussläufer (1) nach einem der Ansprüche 1 bis 6, **dadurch gekennzeichnet, dass** die Schweißverbindungen (71, 72, 73) mittels Elektronenstrahlschweißen oder Laserstrahlschweißen hergestellt sind.

8. Kurzschlussläufer (1) nach einem der Ansprüche 1 bis 7, **dadurch gekennzeichnet, dass** die Scheiben (6) eine Dicke von 2 mm bis 10 mm, bevorzugt 2 mm bis 6 mm, aufweisen.

9. Kurzschlussläufer (1) nach einem der Ansprüche 1 bis 8, **dadurch gekennzeichnet, dass** die Scheiben (6) aus einer Stahllegierung, einer Aluminiumlegierung, Kupfer oder einer Kupferlegierung, insbesondere aus einer Cu-Cr-Zr-Legierung oder einer Cu-Ag-Legierung, bestehen.

10. Verfahren zur Herstellung eines Kurzschlussläufers (1) nach einem der Ansprüche 1 bis 9, **dadurch gekennzeichnet,**
- **dass** ein Läuferblechpaket (3) auf einer Welle (2) angeordnet wird,
- **dass** auf der Welle (2) Kurzschlussringe (5) angeordnet werden, die aus Scheiben (6) mit Ausnehmungen (63) lagenweise zu einem Scheibenpaket (7) zusammengesteckt werden, wobei die Enden der Läuferstäbe (4) aus dem Läuferblechpaket (3) durch die Ausnehmungen (63) hindurchtreten können,
- **dass** im Innern des Läuferblechpakets (3) und in den Ausnehmungen (63) der Scheiben (6) Läuferstäbe (4) angeordnet werden,
- **dass** benachbarte Scheiben (6) des Kurzschlussringes (5), ausgehend von der Mantelfläche (61) als Stirnseite, über den Außenumfang mittels einer Schweißverbindung (71, 72, 73) verbunden werden, welche sich radial bis zu einer Schweißtiefe (t₁, t₂, t₃) einwärts erstreckt, wobei sich die Schweißtiefe (t₁, t₂, t₃) von zumindest einer Schweißverbindung (71, 72, 73) bei mehreren axial aufeinanderfolgenden Schweißverbindungen (71, 72, 73) zwischen aufeinanderfolgenden Scheiben (6) von der Schweißtiefe (t₁, t₂, t₃) der übrigen Schweißverbindungen (71, 72, 73) unterscheidet.

## Claims

1. Squirrel cage rotor (1), in particular for an asynchronous machine, optionally having a shaft (2), rotor plate assembly (3) having internally arranged rotor rods (4) and short-circuit rings (5), wherein at least a portion of a short-circuit ring (5) comprises a disc assembly (7) which is constructed in layers from discs (6) with recesses (63) through which the ends of the rotor rods (4) extend out of the rotor plate assembly (3),
**characterised in that**
- the disc assembly (7) of a short-circuit ring (5) comprises a plurality of individual discs (6) with the same diameter,
- **in that** adjacent discs (6) of a short-circuit ring (5), starting from the covering face (61) as an end side, are connected over the outer periphery by means of a weld connection (71, 72, 73) which extends radially inwards as far as a weld depth (t₁, t₂, t₃), and
- **in that** the weld depth (t₁, t₂, t₃) of at least one weld connection (71, 72, 73) when there are a plurality of axially sequential weld connections (71, 72, 73) differs between sequential discs (6) from the weld depth (t₁, t₂, t₃) of the remaining weld connections (71, 72, 73).

2. Squirrel cage rotor (1) according to claim 1,
**characterised in that** the weld depths (t₁, t₂, t₃) are constructed alternately between sequential discs (6) in terms of their extent with axially sequential weld connections (71, 72, 73).

3. Squirrel cage rotor (1) according to claim 1,
**characterised in that** with axially sequential weld connections (71, 72, 73), from the outer side in the direction of the rotor plate assembly (3), the weld depths (t₁, t₂, t₃) are constructed in a decreasing manner.

4. Squirrel cage rotor (1) according to any one of claims 1 to 3, **characterised in that** the smallest weld depth (71, 72, 73) extends at least as far as the radially outermost surface of a rotor rod (4).

5. Squirrel cage rotor (1) according to any one of claims 1 to 4, **characterised in that** the greatest weld depth (71, 72, 73) extends at the most as far as the radially innermost surface of a rotor rod (4).

6. Squirrel cage rotor (1) according to any one of claims 1 to 5, **characterised in that** the weld connections (71, 72, 73) extend around the entire outer periphery.

7. Squirrel cage rotor (1) according to any one of claims 1 to 6, **characterised in that** the weld connections (71, 72, 73) are produced by means of electron beam welding or laser beam welding.

8. Squirrel cage rotor (1) according to any one of claims 1 to 7, **characterised in that** the discs (6) have a thickness of from 2 mm to 10 mm, preferably from 2 mm to 6 mm.

9. Squirrel cage rotor (1) according to any one of claims 1 to 8, **characterised in that** the discs (6) comprise a steel alloy, an aluminium alloy, copper or a copper alloy, in particular a Cu-Cr-Zr alloy or a Cu-Ag alloy.

10. Method for producing a squirrel cage rotor (1) according to any one of claims 1 to 9, **characterised in that**
- a rotor plate assembly (3) is arranged on a shaft (2),
- **in that** there are arranged on the shaft (2) short-circuit rings (5) which are assembled from discs (6) with recesses (63) in layers to form a disc assembly (7), wherein the ends of the rotor rods (4) can extend from the rotor plate assembly (3) through the recesses (63),
- **in that** rotor rods (4) are arranged inside the rotor plate assembly (3) and in the recesses (63) of the discs (6),
- **in that** adjacent discs (6) of the short-circuit ring (5), starting from the covering face (61) as an end side, are connected over the outer periphery by means of a weld connection (71, 72, 73), which extends radially inwards as far as a weld depth (t₁, t₂, t₃), wherein the weld depth (t₁, t₂, t₃) differs from at least one weld connection (71, 72, 73) in the case of a plurality of axially sequential weld connections (71, 72, 73) between sequential discs (6) from the weld depth (t₁, t₂, t₃) of the remaining weld connections (71, 72, 73).

## Revendications

1. Rotor à cage d'écureuil (1), en particulier pour une machine asynchrone, sélectivement avec un arbre (2), un paquet de tôles de rotor (3) avec des barres de rotor (4) disposées à l'intérieur et des anneaux de court-circuit (5), dans lequel au moins une partie d'un anneau de court-circuit (5) est constituée d'un paquet de disques (7), lequel est composé, par couches, de disques (6) avec des évidements (63), à travers lesquels passent les extrémités des barres de rotor (4) provenant du paquet de tôles de rotor (3),
**caractérisé en ce**
- **que** le paquet de disques (7) d'un anneau de court-circuit (5) est composé de plusieurs disques (6) individuels à diamètre identique,
- **que** des disques (6) voisins d'un anneau de court-circuit (5), à partir de la surface d'enveloppe (61) en tant que face frontale, sont reliés sur la périphérie extérieure au moyen d'une liaison soudée (71, 72, 73), laquelle s'étend radialement vers l'intérieur jusqu'à une profondeur de soudure (t₁, t₂, t₃), et
- **que** la profondeur de soudure (t₁, t₂, t₃) d'au moins une liaison soudée (71, 72, 73), dans le cas de plusieurs liaisons soudées (71, 72, 73) successives axialement entre des disques (6) successifs, se différencie de la profondeur de soudure (t₁, t₂, t₃) des liaisons soudées (71, 72, 73) restantes.

2. Rotor à cage d'écureuil (1) selon la revendication 1, **caractérisé en ce que** les profondeurs de soudure (t₁, t₂, t₃), dans leur étendue, dans le cas de liaisons soudées (71, 72, 73) successives axialement, sont réalisées de manière alternée entre des disques (6) successifs.

3. Rotor à cage d'écureuil (1) selon la revendication 1, **caractérisé en ce que**, dans le cas de liaisons soudées (71, 72, 73) successives axialement, les profondeurs de soudure (t₁, t₂, t₃) sont réalisées de manière décroissante depuis l'extérieur en direction du paquet de tôles de rotor (3).

4. Rotor à cage d'écureuil (1) selon l'une quelconque des revendications 1 à 3, **caractérisé en ce que** la plus petite profondeur de soudure (71, 72, 73) s'étend au moins jusqu'à la surface radialement extérieure d'une barre de rotor (4).

5. Rotor à cage d'écureuil (1) selon l'une quelconque des revendications 1 à 4, **caractérisé en ce que** la plus grande profondeur de soudure (71, 72, 73) s'étend au maximum jusqu'à la surface radialement intérieure d'une barre de rotor (4).

6. Rotor à cage d'écureuil (1) selon l'une quelconque des revendications 1 à 5, **caractérisé en ce que** les liaisons soudées (71, 72, 73) s'étendent autour de toute la périphérie extérieure.

7. Rotor à cage d'écureuil (1) selon l'une quelconque des revendications 1 à 6, **caractérisé en ce que** les liaisons soudées (71, 72, 73) sont établies au moyen d'un soudage par faisceau d'électrons ou soudage laser.

8. Rotor à cage d'écureuil (1) selon l'une quelconque des revendications 1 à 7, **caractérisé en ce que** les disques (6) présentent une épaisseur de 2 mm à 10 mm, de préférence de 2 mm à 6 mm.

9. Rotor à cage d'écureuil (1) selon l'une quelconque des revendications 1 à 8, **caractérisé en ce que** les disques (6) sont constitués d'un alliage d'acier, d'un alliage d'aluminium, de cuivre ou d'un alliage de cuivre, en particulier d'un alliage Cu-Cr-Zr ou d'un alliage Cu-Ag.

10. Procédé de fabrication d'un rotor à cage d'écureuil (1) selon l'une quelconque des revendications 1 à 9, **caractérisé en ce**
- **qu'**un paquet de tôles de rotor (3) est disposé sur un arbre (2),
- **que** des anneaux de court-circuit (5), qui sont assemblés en couches à partir de disques (6) avec des évidements (63) en un paquet de disques (7), sont disposés sur l'arbre (2), dans lequel les extrémités des barres de rotor (4) provenant du paquet de tôles de rotor (3) peuvent passer à travers les évidements (63),
- **que** des barres de rotor (4) sont disposées à l'intérieur du paquet de tôles de rotor (3) et dans les évidements (63) des disques (6),
- **que** des disques (6) voisins de l'anneau de court-circuit (5), à partir de la surface d'enveloppe (61) en tant que face frontale, sont reliés sur la périphérie extérieure au moyen d'une liaison soudée (71, 72, 73), laquelle s'étend radialement vers l'intérieur jusqu'à une profondeur de soudure (t₁, t₂, t₃), dans lequel la profondeur de soudure (t₁, t₂, t₃) d'au moins une liaison soudée (71, 72, 73), dans le cas de plusieurs liaisons soudées (71, 72, 73) successives axialement entre des disques (6) successifs, se différencie de la profondeur de soudure (t₁, t₂, t₃) des liaisons soudées (71, 72, 73) restantes.
